# EUROPÄISCHE PATENTANMELDUNG

(11) **EP 1 857 873 A2**
(43) Veröffentlichungstag der Anmeldung: **21.11.2007**
(21) Anmeldenummer: 07008730.9
(22) Anmeldetag: 28.04.2007
(51) Int. Cl.: G03B 15/03, H04N 5/225

(54) **Kamera-Beleuchtungseinheit**

(30) Priorität: 16.05.2006 DE 102006023142
(71) Anmelder: SICK AG, 79183 Waldkirch (DE)
(72) Erfinder: Alt, Gerhard, 79350 Sexau (DE); Bürger, Jürgen, 79331 Nimburg (DE); Kiemele, Viktor, 79183 Waldkirch (DE)
(74) Vertreter: Ludewigt, Christoph

(57) **Zusammenfassung**

Die Erfindung beschreibt einen optoelektronischen Sensor zur berührungslosen Erfassung von Objekten mit einem Aufnahmesystem, das ein Empfangsobjektiv und eine Lichtempfangseinheit aufweist. Gleichzeitig ist bei diesem Sensor mit dem Aufnahmesystem inhärent eine Auflichtbeleuchtungsvorrichtung verbunden, mit der die Objektebene ausgeleuchtet wird. Dabei weist die inhärente Auflichtbeleuchtungsvorrichtung in ihrer Außenform im Wesentlichen die Form einer flachen Scheibe auf, welche das Empfangsobjektiv rotationssymmetrisch umschließt. Dabei besitzt die Auflichtbeleuchtungsvorrichtung eine zentrale Öffnung, durch die das am Objekt remittierte Licht ins Empfangsobjektiv eintreten kann. Durch die konstruktive Ausgestaltung bilden das Aufnahmesystem und die Auflichtbeleuchtungsvorrichtung eine kompakte Einheit. Nach der Erfindung befindet sich innerhalb der scheibenförmigen Auflichtbeleuchtungsvorrichtung ein an die Größe der Außenform angepasstes optisches Funktionselement. In die Grenzfläche, die dem Objekt abgewandt ist, koppeln mehrere Lichtquellen ihr ausgesandtes Licht ein und aus der dem Objekt zugewandten Grenzfläche des optischen Funktionselements tritt das Licht gleichmäßig verteilt aus und leuchtet die Objektebene mit homogener Leuchtstärkeverteilung aus.

## Beschreibung

Die Erfindung betrifft einen optoelektronischen Sensor zur berührungslosen Erfassung von Objekten nach dem Oberbegriff des Anspruchs 1.

Derartige Sensoren werden zum Beispiel in einem Fertigungsprozess eingesetzt, um die Anwesenheit eines Objektes innerhalb eines Bereiches detektieren zu können. Dieses Erkennen ist oft mit weiteren Funktionen wie zum Beispiel einer positionsgenauen Lageerkennung, einer Sortier- oder Selektionsfunktion usw. verbunden.
Zu diesem Zweck wird das Objekt mit einer Beleuchtungsvorrichtung angeleuchtet und dabei das am Objekt reflektierte bzw. remittierte Licht mit einem Aufnahmesystem erfasst. Das Aufnahmesystem besteht dabei in der Regel aus einem Empfangsobjektiv und einer in dessen Bildebene angeordneten Lichtempfangseinheit. Je nach der Aufgabe dieses Sensors besteht die Lichtempfangseinheit aus einem oder mehreren lichtempfindlichen Elementen. In diesem Sinn kann ein derartiges Aufnahmesystem aus einer einfachen Lichtschranke mit zum Beispiel einer einzelnen positionsempfindlichen Lichtempfangseinheit oder einer digitalen Kamera bestehen. Im Falle einer Kamera ist die Lichtempfangseinheit meist eine matrixförmige Anordnung von mehreren lichtempfindlichen Elementen, die in CMOS- oder CCD-Technologie aufgebaut sind. Außerdem ist beim Einsatz einer Kameraausführung in der Regel ein geeignetes Auswertungssystem zur Bildverarbeitung nachgeschaltet.

Um eine möglichst hohe Zuverlässigkeit beim Betrieb einer derartigen Sensoreinrichtung zu gewährleisten, ist es insbesondere bei nicht kooperativen Objekten notwendig, das Aufnahmesystem mit einer optimalen Beleuchtungsvorrichtung zu verbinden.
Die nach dem Stand der Technik bekannten Beleuchtungsvorrichtungen sind beispielsweise mit Glühlampen, LEDs oder mit Laserquellen ausgestatteten Leuchtmittel bestückt, deren Licht teilweise auch mit herkömmlichen Linsen oder Glasfasern auf die Objekte gerichtet wird.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welche üblicherweise für den Betrieb von optoelektronischen Sensoren eingesetzt werden können.

Derartige nach dem Stand der Technik bekannte optoelektronische Sensoren haben im Einsatzfall oft Probleme, wenn Objekte, deren Oberfläche einen hohen Glanzanteil aufweisen, sicher erkannt werden sollen. Die Probleme sind darin begründet, dass, wenn ein Objekt mit hohem Glanzanteil auf der Oberfläche mit einem gerichteten Lichtstrahl beleuchtet wird, durch den Glanzanteil am Objekt das reflektierte Licht in eine Richtung reflektiert werden kann, die außerhalb der Öffnung des Empfangsobjektivs liegt. In diesem Fall sind die Bildinhalte, die dem Glanzanteil des Objektes zugeordnet sind, auf der Lichtempfangseinheit dunkel und damit nicht oder nur bedingt auswertbar. Gleiches gilt für den Fall, wenn das am Glanzanteil des Objektes reflektierte Licht der Beleuchtungsvorrichtungen in die Öffnung des Empfangsobjektivs einfällt und dadurch auf der Lichtempfangseinheit eine sehr hohe Leuchtdichte entsteht. Die dadurch entstehenden Hot Spots vermindern die Bildqualität derart, dass die Erkennungsleistung des optoelektronischen Sensors stark herabgesetzt wird.
Zur Umgehung dieser Probleme ist es nach dem Stand der Technik bekannt, das Objekt mit einer Dome-Beleuchtung auszuleuchten. Bei einer Dome-Beleuchtung wird das zu beleuchtende Objekt von einer nahezu halbkugelförmigen Haube umschlossen. Diese halbkugelförmige Haube ist auf ihrer Innenfläche mit einer diffus reflektierenden Oberflächenschicht belegt. Gleichzeitig sind mehrere breitstreuende Lichtquellen angeordnet, die insbesondere die Innenwand der halbkugelförmigen Haube und damit auch das Objekt anleuchten. Auf diese Weise wird das Objekt aus einem großen Raumwinkelbereich heraus angeleuchtet. Diese, für die Ausleuchtung des Objektes an sich gute Dome-Beleuchtung, bringt jedoch im praktischen Einsatz mehrere Nachteil mit sich. So ist insbesondere die große Bauhöhe von Nachteil, die den Freiraum zwischen dem Sensor und der Objektebene stark einschränkt. Ein weiterer Nachteil dieser Dome-Beleuchtung ist darin zu sehen, weil eine derart große Beleuchtungsvorrichtung nicht mehr sinnvoll mit dem Aufnahmesystem zu einer Einheit integriert werden kann.

Der Erfindung liegt deshalb die Aufgabe zugrunde, mit einer möglichst flachen Beleuchtungsvorrichtung, die inhärent mit dem Aufnahmesystem verbunden ist, ein in der Objektebene befindliches Objekt möglichtst diffus aus einem großen Raumwinkelbereich heraus zu beleuchten.

Die Lösung dieser Aufgabe erfolgt durch die Merkmale des Anspruchs 1. Danach wird ein optoelektronischer Sensor zur berührungslosen Erfassung von Objekten bzw. Objektmerkmalen beschrieben, der ein Aufnahmesystem mit einem Empfangsobjektiv und einer Lichtempfangseinheit aufweist. Gleichzeitig ist bei diesem Sensor mit dem Aufnahmesystem inhärent eine Auflichtbeleuchtungsvorrichtung verbunden, mit der die Objektebene ausgeleuchtet wird. Erfindungsgemäß ist dabei vorgesehen, dass die inhärente Auflichtbeleuchtungsvorrichtung in ihrer Außenform im Wesentlichen die Form einer flachen Scheibe aufweist, welche das Empfangsobjektiv rotationssymmetrisch umschließt. Dabei besitzt die Auflichtbeleuchtungsvorrichtung eine zentrale Öffnung, durch die das am Objekt remittierte Licht ins Empfangsobjektiv eintreten kann. Durch diese erfindungsgemäße konstruktive Ausgestaltung bilden das Aufnahmesystem und die Auflichtbeleuchtungsvorrichtung eine kompakte Einheit, bei der auch die erforderlichen elektrischen Versorgungs- und Datenleitungen der beiden Komponenten in vorteilhafter Weise zusammengefasst sind. Nach der Erfindung befindet sich innerhalb der scheibenförmigen Auflichtbeleuchtungsvorrichtung ein an die Größe der Außenform angepasstes optisches Funktionselement, in dessen Grenzfläche, die dem Objekt abgewandt ist, mehrere Lichtquellen ihr ausgesandtes Licht einkoppeln und aus der dem Objekt zugewandten Grenzfläche das Licht gleichmäßig verteilt austritt und so die Objektebene mit homogener Leuchtstärkeverteilung ausleuchtet.
Besonders vorteilhaft ist es dabei, wenn der Außendurchmesser des optischen Funktionselementes vielfach größer als der wirksame Öffnungsdurchmesser des Empfangsobjektives ist, weil dadurch auch die Flächenanteile eines Objektes, die stark geneigt zur optischen Achse des Empfangsobjektives angeordnet sind, das gesamte Gesichtfeld noch gut ausleuchten.

Weiterhin ist es vorteilhaft, dass das aus dem optischen Funktionselement austretende Licht die Objektebene diffus ausleuchtet, weil dadurch mögliche Glanzstellen auf dem Objekt keine Erkennungsfehler durch Dunkelzonen bzw. durch Hot Spots in der Bildebene hervorrufen.
In einer bevorzugten Ausführungsform der Erfindung sind die Lichtquellen ohne Luftspalt, d. h. über ein geeignetes optisches Kontaktmittel mit dem optischen Funktionselement verbunden. Auf diese Weise sind keine optischen Grenzflächen zwischen zum Beispiel einer LED und dem optische Funktionselement vorhanden, so dass dadurch der Einkoppelwirkungsgrad des Lichtes von der LED in das optische Funktionselement erhöht ist.
In einer anderen Ausführung sind die Lichtquellen über eine lösbare Verbindung mit dem optischen Funktionselement verbunden. Diese Ausführungsform ist insbesondere dann vorteilhaft, wenn zum Beispiel die optischen Funktionselemente zum Zwecke der Anpassung an verschiedene Objektabstände oder zur Veränderung der Größe der ausgeleuchteten Fläche in der Objektebene ausgewechselt werden sollen.

Eine vorteilhafte Ausgestaltung der rückseitigen optischen Grenzfläche des optischen Funktionselementes sieht vor, dass diese zumindest teilweise ein ortsabhängiges Oberflächenprofil aufweist. Dieses ortsabhängige Oberflächenprofil kann dabei aus Linsen, Keilflächen oder Verlaufflächen gebildet sein. Dabei ist es auch vorgesehen, diese Elemente in Mikroform, Fresnelform oder als diffraktive Elemente auszuführen. Mit einem derartigen Oberflächenprofil auf der rückseitigen optischen Grenzfläche ist es möglich, durch Ausstreuungen und/oder durch Ablenkungen den Verlauf des eingekoppelten Lichtes gezielt zu beeinflussen.
Vorteilhaft ist es weiterhin, wenn das optische Funktionselement auf der rückseitigen optischen Grenzfläche zumindest teilweise mit einer Spiegelschicht versehen ist. Auf diese Weise kann auch das im Funktionselement eingekoppelte Licht, welches unter einem kleineren Winkel als dem Grenzwinkel der Totalreflexion von der Innenseite kommend auf die Grenzfläche trifft, in dem Funktionselement gehalten werden. Dies erhöht den Wirkungsgrad der Auflichtbeleuchtungsvorrichtung.
Eine weitere Ausführungsform der Erfindung sieht vor, dass auf der rückseitigen Grenzfläche das optische Funktionselement zumindest teilweise mit einer nichtmetallischen Beschichtung bzw. Bedruckung versehen ist. Mit diesen partiell unterschiedlich starken bzw. dichten Beschichtungen/Bedruckungen ist es möglich, dass die Homogenität der Lichtverteilung beim Lichtaustritt aus dem Funktionselement in vorteilhafter Weise in weiten Grenzen beeinflusst wird.
Analog zu den Gestaltungsformen für die rückseitige Grenzfläche des optischen Funktionselementes ist es in weiteren vorteilhaften Ausführungen der Erfindung vorgesehen, alternativ oder gleichzeitig auch die zur Objektebene hinweisende Fläche des optischen Funktionselement mit einer Profilierung und/oder Beschichtung bzw. Bedruckung zu versehen.
Außerdem ist es von Vorteil, wenn das optische Funktionselement einen deutlich größeren Flächenanteil als die ausgeleuchtete Objektebene aufweist. Durch diese Maßnahme wird ein Objekt, das sich in der Objektebene befindet, aus einem gro-ßen Raumwinkelbereich heraus beleuchtet. Damit ist es möglich, dass auch Flächenanteile von einem Objekt, das geneigt zur optischen Achse des Empfangsobjektives angeordnet ist, das gesamte Gesichtfeld noch gut ausleuchten.
Eine Homogenisierung der Lichtverteilung kann nach der Erfindung in vorteilhafter Weise auch dadurch erreicht werden, dass das optische Funktionselement aus einem Werkstoff hergestellt ist, der zumindest teilweise eine Volumenstreuung aufweist.
In einer vorteilhaften Erweitung sind dem Werkstoff für das optische Funktionselement, der zum Beispiel aus Polycarbonat besteht, noch Glasfaseranteile beigemischt.
Es ist weiterhin als vorteilhaft anzusehen, wenn das optische Funktionselement rotationssymmetrisch eine unterschiedliche Dicke hat. So kann zum Beispiel das an sich flache optische Funktionselement in seinem Mittenbereich eine größere Materialstärke aufweisen und somit die Form eines Kegels mit einem sehr stumpfem Kegelwinkel haben. Weiterhin ist auch vorgesehen, dass eine oder beide der Grenzflächen des optischen Funktionselementes eine leicht sphärische, ashärische oder spline Kurve aufweisen. Mit diesen geometrischen Varianten bei der Form des Funktionselementes ist möglich, neben der Homogenisierung der Lichtverteilung auch die Abstrahlrichtung des Lichtes zwischen dem Funktionselement und der ausgeleuchteten Objektebene zu beeinflussen.
Unter dem Gesichtspunkt einer kostengünstigen und kleinvolumigen Bauform ist es vorteilhaft, wenn die Lichtquellen ringförmig im Mittenbereich unmittelbar um das Empfangsobjektiv herum angeordnet sind. In diesem Fall sind zum Beispiel die LED's alle auf einer scheibenförmigen Leiterplatte angeordnet, wodurch der elektrische Verdrahtungsaufwand innerhalb der inhärenten Auflichtbeleuchtungsvorrichtung deutlich minimiert ist.

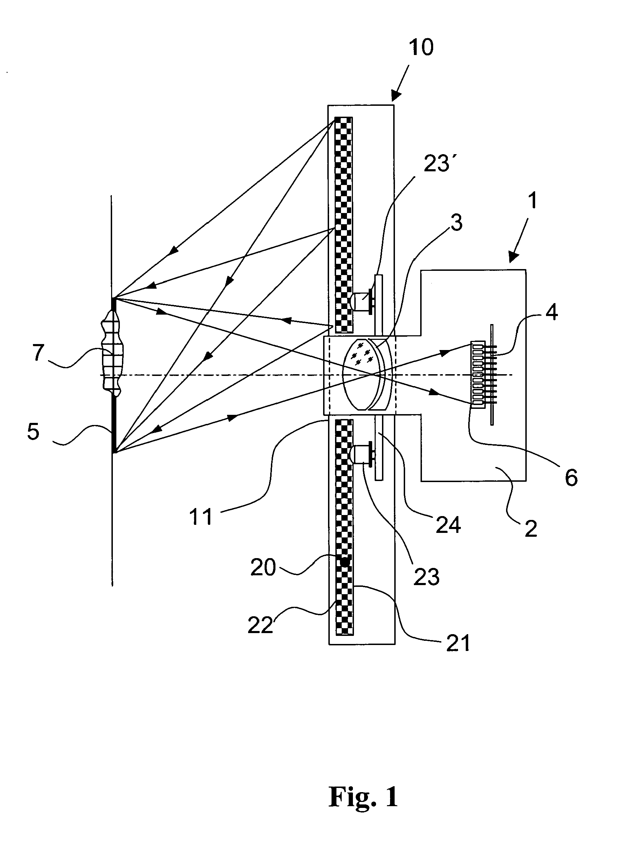

Die Erfindung wird im Folgenden beispielhaft unter Bezugnahme auf die Zeichnung beschrieben, deren einzige Figur 1 eine schematische Ansicht eines optoelektronischen Sensors mit einem Aufnahmesystem und einer Auflichtbeleuchtungsvorrichtung zeigt.

Der in Fig. 1 gezeigte optoelektronische Sensor hat ein Aufnahmesystem 1, welches in einem Gehäuse 2 ein Empfangsobjektiv 3 und eine Lichtempfangseinheit 4 aufweist. Diese Lichtempfangseinheit 4 kann aus einem einzelnen lichtempfindlichen Element oder, wie es in Fig. 1 dargestellt ist, aus einer Vielzahl von lichtempfindlichen Elementen, die in CMOS- oder CCD-Technologie aufgebaut sind, bestehen. Mit dem Empfangsobjektiv 3 aus dem Aufnahmesystem 1 wird ein Abbild von einer Objektebene 5 auf der Oberfläche 6 der Lichtempfangseinheit 4 erzeugt. Wenn die Lichtempfangseinheit 4 zum Beispiel aus einem in Matrixform aufgebauten zweidimensionalen Lichtempfänger besteht, kann, wie dies von einer Digitalkamera bekannt ist, das Abbild von der Objektebene 5 ausgelesen und einer hier nicht dargestellten Bildverarbeitungseinheit zugeführt werden.
Befindet sich, wie ebenfalls in Fig. 1 dargestellt, ein Objekt 7 in der Objektebene 5, so werden von dem Objekt 7 insbesondere die Merkmale der Objektoberfläche auf der Oberfläche 6 der Lichtempfangseinheit 4 wiedergegeben. Für die Qualität dieser Abbildung ist neben der Güte des Empfangsobjektivs 3 von zentraler Bedeutung, wie das Objekt 7 in der Objektebene 5 beleuchtet ist. Um einen großen Informationsinhalt aus dem Abbild des Objekts 7 erfassen zu können, ist es notwendig, das Objekt 7 mit gleichmäßiger Beleuchtungsstärke, die aus einem möglicht großen Raumwinkelbereich heraus erzeugt wird, diffus auszuleuchten. Zu diesem Zweck ist das Aufnahmesystem 1 mit einer inhärenten Auflichtbeleuchtungsvorrichtung 10 versehen. Diese Auflichtbeleuchtungsvorrichtung 10 hat in seiner Außenform im Wesentlichen die Form einer flachen Scheibe mit einer zentralen Öffnung 11. Durch diese zentrale Öffnung 11 hindurch kann das Aufnahmesystem 1 das Abbild von der Objektebene 5 aufnehmen. Die Hauptkomponente in der Auflichtbeleuchtungsvorrichtung 10 ist ein optisches Funktionselement 20 mit einer rückseitigen optischen Grenzfläche 21 und einer zur Objektebene hinweisenden Grenzfläche 22. Unmittelbar angrenzend an die rückseitige optische Grenzfläche 21 sind mehrere Lichtquellen 23, 23', die hier in Form von LED's dargestellt sind, auf einer Leiterplatte 24 angeordnet. Das von den Lichtquellen 23 ausgesandte Licht wird unmittelbar in das optische Funktionselement 20 eingekoppelt. Zu diesem Zweck können die Lichtquellen 23 über ein optisches Kontaktmittel fest mit dem optischen Funktionselement 20 verbunden sein oder die Lichtquellen 23 koppeln ihr Licht über einen geringen Luftspalt in das optische Funktionselement 20 ein. Die rückseitige optische Grenzfläche 21 und/oder die zur Objektebene hinweisende Grenzfläche 22 sind mit einem im Detail nicht dargestellten ortsabhängigen Oberflächenprofil versehen. Dieses Oberflächenprofil setzt sich je nach Aufgabenstellung aus mehreren verschiedenenartigen optischen Elementen zusammen. Dabei haben diese Elemente die Form von einzelnen Linsen, Keilflächen oder Verlaufflächen. In einer speziellen Ausführungsform ist die optische Grenzfläche 21 und/oder die zur Objektebene hinweisende Grenzfläche 22 partiell noch mit einer ortsabhängigen Spiegelschicht und/oder einer Bedruckung versehen.
In einer weiteren Ausführungsform ist es vorgesehen, dass als Werkstoff für das optische Funktionselement 20 ein volumenstreuendes Material verwendet wird. Ebenso ist es auch vorgesehen, dass die beiden Grenzflächen 21 und 22 des optischen Funktionselementes 20 eine leicht sphärische, asphärische oder spline Kurve aufweisen.
Mit diesen optischen Maßnahmen innerhalb und an den beiden Grenzflächen 21 und 22 des optischen Funktionselements 20 wird erreicht, dass das von den Lichtquellen 23 in die rückseitige optische Grenzfläche 21 eingekoppelte Licht weitgehend homogen aus der zur Objektebene hinweisenden Grenzfläche 22 austritt und damit die Objektebene 5 diffus ausleuchtet.

## Patentansprüche

1. Optoelektronischer Sensor zur berührungslosen Erfassung von Objekten mit einem, in einem Gehäuse eingebauten Aufnahmesystem, bestehend aus einem Empfangsobjektiv und einer Lichtempfangseinheit, in der ein oder mehrere lichtempfindliche Elemente angeordnet sind sowie einer inhärenten Auflichtbeleuchtungsvorrichtung zur Ausleuchtung einer Objektebene vor dem Sensor, **dadurch gekennzeichnet, dass** die inhärente Auflichtbeleuchtungsvorrichtung:
- in seiner Außenform im Wesentlichen die Form einer flachen Scheibe aufweist,
- das Empfangsobjektiv rotationssymmetrisch umschließt,
- eine zentrale Öffnung hat, durch die das am Objekt remittierte Licht ins Empfangsobjektiv eintreten kann,
- ein an die Größe der Außenform angepasstes optisches Funktionselement hat,
- mehrere Lichtquellen eingebaut hat, die ihr ausgesandtes Licht rückseitig in das optische Funktionselement einkoppeln,
- und dass im optischen Funktionselement strahlformende Komponenten vorgesehen sind, die das Licht derart führen, dass es mit homogener Leuchtstärkeverteilung auf der zur Objektebene hinweisende Fläche des optischen Funktionselements austritt.

2. Optoelektronischer Sensor nach Anspruch 1, **dadurch gekennzeichnet, dass** der Außendurchmesser des optischen Funktionselementes vielfach größer als der wirksame Öffnungsdurchmesser des Empfangsobjektives ist.

3. Optoelektronischer Sensor nach Anspruch 2, **dadurch gekennzeichnet, dass** der Außendurchmesser des optischen Funktionselementes etwa dem fünffachen Öffnungsdurchmesser des Empfangsobjektives entspricht.

4. Optoelektronischer Sensor nach einem der vorhergehenden Ansprüche, **dadurch gekennzeichnet, dass** mittels des optischen Funktionselementes die Objektebene diffus ausgeleuchtet ist.

5. Optoelektronischer Sensor nach einem der vorhergehenden Ansprüche, **dadurch gekennzeichnet, dass** die Lichtquellen ohne Luftspalt mit dem optischen Funktionselement verbunden sind.

6. Optoelektronischer Sensor nach einem der vorhergehenden Ansprüche, **dadurch gekennzeichnet, dass** die Lichtquellen über eine lösbare Verbindung mit dem optischen Funktionselement verbunden sind.

7. Optoelektronischer Sensor nach einem der vorhergehenden Ansprüche, **dadurch gekennzeichnet, dass** das optische Funktionselement auf der rückseitigen optischen Grenzfläche zumindest teilweise ein ortsabhängiges Oberflächenprofil aufweist.

8. Optoelektronischer Sensor nach Anspruch 7, **dadurch gekennzeichnet, dass** das ortsabhängige Oberflächenprofil aus Linsen, Keilflächen oder Verlaufflächen gebildet ist, die als Elemente in Mikroform, Fresnelform oder als diffraktive Elemente ausgeführt sind.

9. Optoelektronischer Sensor nach einem der vorhergehenden Ansprüche, **dadurch gekennzeichnet, dass** das optische Funktionselement auf der rückseitigen optischen Grenzfläche zumindest teilweise mit einer Spiegelschicht versehen ist.

10. Optoelektronischer Sensor nach einem der vorhergehenden Ansprüche, **dadurch gekennzeichnet, dass** das optische Funktionselement auf der rückseitigen Grenzfläche zumindest teilweise mit einer nichtmetallischen Beschichtung versehen ist.

11. Optoelektronischer Sensor nach Anspruch 9 und 10, **dadurch gekennzeichnet, dass** die Verspiegelung bzw. Beschichtung auf der rückseitigen Grenzfläche des optischen Funktionselementes ortsabhängig eine unterschiedliche Dichte aufweist.

12. Optoelektronischer Sensor nach einem der vorhergehenden Ansprüche, **dadurch gekennzeichnet, dass** die zur Objektebene hinweisende Grenzfläche des optischen Funktionselements zumindest teilweise ein ortsabhängiges Oberflächenprofil aufweist.

13. Optoelektronischer Sensor nach Anspruch 12, **dadurch gekennzeichnet, dass** das ortsabhängige Oberflächenprofil der zur Objektebene hinweisenden Grenzfläche des optischen Funktionselements aus Linsen, Keilflächen oder Verlaufflächen gebildet ist.

14. Optoelektronischer Sensor nach Anspruch 13, **dadurch gekennzeichnet, dass**, die Linsen, Keilflächen oder Verlaufflächen als mikro-, fresnelsche- oder diffraktive Elemente ausgeführt sind.

15. Optoelektronischer Sensor nach einem der vorhergehenden Ansprüche, **dadurch gekennzeichnet, dass** die zur Objektebene hinweisenden Grenzfläche des optischen Funktionselements zumindest teilweise mit einer variablen Spiegelschicht versehen ist.

16. Optoelektronischer Sensor nach einem der vorhergehenden Ansprüche, **dadurch gekennzeichnet, dass** die zur Objektebene hinweisende Grenzfläche des optischen Funktionselements zumindest teilweise mit einer nichtmetallischen Beschichtung versehen ist.

17. Optoelektronischer Sensor nach Anspruch 15 und 16, **dadurch gekennzeichnet, dass** die Verspiegelung bzw. Beschichtung auf zur Objektebene hinweisende Grenzfläche des optischen Funktionselementes ortsabhängig eine unterschiedliche Dichte aufweist.

18. Optoelektronischer Sensor nach einem der vorhergehenden Ansprüche, **dadurch gekennzeichnet, dass** das optische Funktionselement einen deutlich größeren Flächenanteil als die ausgeleuchtete Objektebene aufweist.

19. Optoelektronischer Sensor nach einem der vorhergehenden Ansprüche, **dadurch gekennzeichnet, dass** das optische Funktionselement aus einem Werkstoff hergestellt ist, das zumindest teilweise eine Volumenstreuung aufweist.

20. Optoelektronischer Sensor nach einem der vorhergehenden Ansprüche, **dadurch gekennzeichnet, dass** das optische Funktionselement aus einem Verbundwerkstoff mit zugesetzten Glasfaseranteilen hergestellt ist

21. Optoelektronischer Sensor nach einem der vorhergehenden Ansprüche, **dadurch gekennzeichnet, dass** das optische Funktionselement rotationssymmetrisch eine unterschiedliche Dicke hat.

22. Optoelektronischer Sensor nach einem der vorhergehenden Ansprüche, **dadurch gekennzeichnet, dass** die beiden Grenzflächen des optischen Funktionselementes eine leicht sphärische, ashärische oder spline Kurve aufweisen.

23. Optoelektronischer Sensor nach einem der vorhergehenden Ansprüche, **dadurch gekennzeichnet, dass** die Lichtquellen auf der rückseitigen optischen Grenzfläche unmittelbarer um die Öffnung des Empfangsobjektivs angeordnet sind.
